# EUROPÄISCHE PATENTSCHRIFT

(11) **EP 2 838 776 B1**
(45) Veröffentlichungstag und Bekanntmachung des Hinweises auf die Patenterteilung: **20.11.2019**
(21) Anmeldenummer: 13729645.5
(22) Anmeldetag: 06.06.2013
(51) Int. Cl.: B61C 3/00, B61C 17/04, B61D 17/16

(54) **HINTERLÜFTETES SONNENSEGEL FÜR DACHGERÄTE VON SCHIENENFAHRZEUGEN**
REAR-VENTILATED AWNING FOR ROOF UNITS OF RAIL VEHICLES
PANNEAU SOLAIRE À AÉRATION ARRIÈRE POUR DES APPAREILS DE TOIT DE VÉHICULES FERROVIAIRES

(30) Priorität: 26.06.2012 DE 102012210857
(43) Veröffentlichungstag der Anmeldung: 25.02.2015
(73) Patentinhaber: Siemens Mobility GmbH, 81739 München (DE)
(72) Erfinder: GEBHARD, Bruno, 91301 Forchheim (DE); THAMM, Markus, 90491 Nürnberg (DE)
(86) Internationale Anmeldenummer: PCT/EP2013/061631
(87) Internationale Veröffentlichungsnummer: WO 2014/001047

(56) Entgegenhaltungen:
- EP-A1- 2 078 655
- WO-A2-2008/006679
- US-A- 5 950 753
- US-A1- 2010 071 584

## Beschreibung

Die Erfindung betrifft ein Schienenfahrzeug mit einem Dach und einem ersten Abschattungsblech, welches beabstandet vom Dach angeordnet ist.

In sonnigen und dadurch heißen Regionen werden auf dem Dach eines Schienenfahrzeugs angeordnete Aggregate stark aufgeheizt. Dies kann zu Beschädigungen von temperatursensiblen Bauteilen, wie z.B. Steuerungen führen. Um dem abzuhelfen, werden Sonnensegel über besonders kritischen Stellen des Dachs angeordnet, beispielsweise mit einem Abstand zwischen Dach und Sonnensegel von ca. 20 mm im Siemens Combino. Bei diesem geringen Abstand wird jedoch kaum Luft ausgetauscht zwischen Dach und Sonnensegel und das Dach daher kaum kühler gehalten, wie ohne das Sonnensegel. Ein größerer Abstand könnte zwar zu einem ausreichenden Luftaustausch führen, dieser ginge jedoch einher mit einer vergleichsweise massiveren Abstützung des Sonnensegels und einem gegebenenfalls unerwünscht hohen Dachaufbau.

Weitere Beispiele von kühlenden Dachaufbauten sind aus den Offenlegungsschriften US 2010/0071584 A1, EP 2 078 655 A1 und WO 2008/006679 A2 bekannt.

Der Erfindung liegt die Aufgabe zugrunde, einer Aufheizung eines Dachs eines Schienenfahrzeugs durch Sonneneinstrahlung entgegenzuwirken.

Gelöst wird die Aufgabe durch den Gegenstand des unabhängigen Patentanspruchs 1. Weiterbildungen und Ausgestaltungen der Erfindung finden sich in den Merkmalen der abhängigen Patentansprüche wieder.

Ein erfindungsgemäßes Schienenfahrzeug, insbesondere ein Schienenfahrzeug des Personenverkehrs, insbesondere des Nahverkehrs, umfasst ein, insbesondere wasserdichtes, Dach und ein erstes Abschattungsblech, welches mit einem Abstand größer Null zum Dach, auf dem Dach angeordnet ist. Das erste Abschattungsblech weist dabei erste Öffnungen zum Durchtritt von Luft auf.

Zwischen dem ersten Abschattungsblech und dem Dach ist erfindungsgemäß zumindest ein weiteres, zweites Abschattungsblech angeordnet, welches seinerseits zweite Öffnungen zum Durchtritt von Luft aufweist. Das zweite Abschattungsblech ist ebenfalls vom Dach des Schienenfahrzeugs beabstandet angeordnet.

Das zweite Abschattungsblech ist dabei weitergebildet parallel zum ersten Abschattungsblech angeordnet ist. Das erste Abschattungsblech ist seinerseits insbesondere parallel zum Dach angeordnet. Das Dach wiederum verläuft gemäß einer Ausführungsform der Erfindung im Wesentlichen horizontal. Die in einer gemeinsamen Fläche, insbesondere in einer gemeinsamen Ebene, liegenden Stege zwischen den Öffnungen der jeweiligen Abschattungsbleche legen hierbei die Fläche, auf die in diesem Zusammenhang Bezug genommen wird, des jeweiligen Abschattungsblechs fest.

Eine weitere Weiterbildung der erfindungsgemäßen Lösung sieht vor, dass ein Verhältnis aus einem ersten Abstand zwischen dem erstem Abschattungsblech und dem Dach und aus einem zweiten Abstand zwischen dem zweiten Abschattungsblech und dem Dach zwischen 1,0 und 1,5 beträgt, insbesondere im Intervall 1,2 und 1,5 liegt. Der Abstand zwischen dem erstem Abschattungsblech und dem Dach beträgt beispielsweise zumindest 20 mm, höchstens jedoch 30 mm. Insbesondere beträgt er 30 mm. Der Abstand zwischen dem zweiten Abschattungsblech und dem ersten Abschottungsblech beträgt seinerseits z.B. zumindest 20 mm, höchstens jedoch 30 mm, insbesondere 20 mm.

Jede Öffnung im ersten und im zweiten Abschattungsblech weist ein lichtes Maß auf. Je größer dieses lichte Maß, desto mehr Licht kann durch die Öffnung treten. Dabei ist es zunächst unerheblich, in welche Richtung das Licht durch die Öffnung fällt. Eine lichte Weite einer Öffnung des ersten oder des zweiten Abschattungsblechs wird hier definiert als größter Flächeninhalt einer Durchtrittsfläche eines Lichtbündels aus zueinander parallelen Lichtstrahlen durch die Öffnung senkrecht zu den Lichtstrahlen. Fällt Licht einer sehr weit entfernten Lichtquelle, wie die Sonne, durch die Öffnung auf eine zu den Lichtstrahlen senkrechte Ebene, entspricht der Flächeninhalt einer ausgeleuchteten Fläche dem lichten Maß der Öffnung in Richtung der Lichtstrahlen. Das größte lichte Maß entspricht der lichten Weite der Öffnung. Eine Projektion des ersten und/oder des zweiten Abschattungsblechs senkrecht zum Dach bildet somit die lichten Maße der Öffnungen senkrecht zum Dach auf dem Dach ab.

Gemäß einem Ausgestaltungsbeispiel der Erfindung beträgt ein Verhältnis aus der Summe aller lichten Weiten der ersten Öffnungen des ersten Abschattungsblechs, also aus einer Gesamtdurchtrittsfläche durch das erste Abschattungsblech, und aus der Summe aller lichten Weiten der zweiten Öffnungen des zweiten Abschattungsblechs, entsprechend aus einer Gesamtdurchtrittsfläche durch das zweite Abschattungsblech zwischen 0,5 und 2, insbesondere liegt es im Intervall 0,7 und 0,95.

Gemäß einer Weiterbildung beträgt ein Verhältnis aus der Summe aller lichten Maße der ersten Öffnungen des ersten Abschattungsblechs senkrecht zum Dach und aus der Summe aller lichten Maße der zweiten Öffnungen des zweiten Abschattungsblechs senkrecht zum Dach zwischen 0,5 und 2, insbesondere liegt das Verhältnis im Intervall 0,9 und 1,1. Wie oben bereits ausgeführt entspricht die Summe aller lichten Maße der Öffnungen eines der Abschattungsbleche senkrecht zum Dach der senkrecht auf das Dach projizierten Fläche der Öffnungen des Abschattungsblechs.

Weitergebildet sind die Öffnungen des ersten und/oder des zweiten Abschattungsblechs jeweils zumindest bereichsweise, insbesondere in Längsrichtung des Schienenfahrzeugs, gleich groß. Beispielsweise weisen alle Öffnungen des ersten und/oder zweiten des Abschattungsblechs jeweils näherungsweise gleich Form und Größe auf. Gemäß einer anderen Ausführungsform nimmt die Größe der Öffnungen des ersten und/oder des zweiten Abschattungsblechs in Querrichtung des Schienenfahrzeugs von außen nach innen zu, um Luft von Außen bis zur Mitte zu zwingen, um über die gesamte Breite zu Kühlen.

Das zweite Abschattungsblech ist erfindungsgemäß so zwischen dem ersten Abschattungsblech und dem Dach angeordnet, dass zumindest eine Projektion des ersten und des zweiten Abschattungsblechs auf das Dach und senkrecht zum Dach frei von Öffnungen ist.

Sowohl das erste Abschattungsblech, wie auch das zweite Abschattungsblech weisen Öffnungen vorgegebener Größen und Formen senkrecht zum Dach auf. Zwischen den Öffnungen sind Stege angeordnet. Werden nun das erste und das zweite Abschattungsblech senkrecht zum Dach auf das Dach projiziert, überdecken die Stege des einen, die Öffnungen des anderen Abschattungsblechs. Sie schatten sich gegenseitig ab. Erreicht wird dies beispielsweise dadurch, dass die zweiten Öffnungen versetzt zu den ersten Öffnungen angeordnet sind.

Darüber hinaus ist das zweite Abschattungsblech so zwischen dem ersten Abschattungsblech und dem Dach angeordnet, dass jede Gerade, welche durch eine erste Öffnung des ersten Abschattungsblechs und durch eine zweite Öffnung des zweiten Abschattungsblechs verläuft und das Dach schneidet, das Dach in einem Winkel kleiner 30° oder größer 150° schneidet, insbesondere ist der Winkel kleiner 20° oder größer 160°.

Somit trifft Licht, welches sowohl durch die ersten Öffnungen im ersten Abschattungsblech, als auch durch die zweiten Öffnungen im zweiten Abschattungsblech fällt, nur in einem kleinen Einfallswinkel auf das Dach. Dies kann beispielsweise bei schräg stehender Sonne, insbesondere früh morgens oder spät abends, der Fall sein. Die Intensität der Einstrahlung ist daher gering und es kommt zu keiner nennenswerten Aufheizung des Dachs. Die Sonneneinstrahlung auf das Dach und eine damit einhergehende Aufheizung des Dachs insbesondere zur Mittagszeit ist wie beschrieben verhindert.

Soll die gesamte Sonneneinstrahlung auf das Dach vermieden werden, wird das zweite Abschattungsblech so zwischen dem ersten Abschattungsblech und dem Dach angeordnet, dass die zweiten Öffnungen des zweiten Abschattungsblechs frei sind vom Durchtritt von Licht, welches durch die ersten Öffnungen des ersten Abschattungsblechs fällt. Licht, welches durch die ersten Öffnungen im ersten Abschattungsblech fällt, trifft somit auf die Stege des zweiten Abschattungsblechs und tritt nicht durch die zweiten Öffnungen im zweiten Abschattungsblech.

Alternativ zum zweiten Abschattungsblech, aber auch in Kombination mit dem zweiten Abschattungsblech, weist das erste Abschattungsblech, insbesondere schräge, vom ersten Abschattungsblech abstehende Blechzungen auf, welche die ersten Öffnungen im ersten Abschattungsblech zumindest teilweise bedecken. Die Blechzungen verringern das lichte Maß der ersten Öffnungen senkrecht zum Dach. Sie schatten die ersten Öffnungen daher zumindest senkrecht zum Dach, und damit insbesondere senkrecht zum ersten Abschattungsblech ab.

Mit den Blechzungen wird angestrebt, dass Licht in einem kleinen Einfallswinkel auf das Dach durch die ersten Öffnungen im ersten Abschattungsblech fällt, um die Intensität der Einstrahlung gering zu halten. Erreicht wird dies beispielsweise dadurch, dass die Blechzungen einen Winkel im Intervall 10°...80°, insbesondere 30°...50° zum ersten, insbesondere horizontalen, Abschattungsblech in einer Ebene parallel zu einer Längsachse des Schienenfahrzeugs und senkrecht zum Abschattungsblech aufweisen.

Die Blechzungen sind weitergebildet fügestellenfrei mit dem ersten Abschattungsblech verbunden, beispielsweise entlang von zueinander parallelen und zur Längsachse des Schienenfahrzeugs senkrechten Strecken. Hergestellt sind die Blechzungen beispielsweise dadurch, dass zunächst U-förmige Blechzungen aus dem ersten Abschattungsblech getrennt, insbesondere in das erste Abschattungsblech geschnitten werden, welche anschließend vom ersten Abschattungsblech weg gebogen werden. Form und Größe der Blechzungen sind dann geeignet, die ersten Öffnungen im ersten Abschattungsblech, abgesehen von fertigungsbedingten Toleranzen, vollständig zu verschließen, falls die Blechzungen in die Ebene des ersten Abschattungsblech gebogen würden. Die Blechzungen sind weitergebildet vom Dach wegweisend gebogen. In einer anderen Variante können sie aber auch zum Dach hin gebogen sein.

Ist ein zweites Abschattungsblech zwischen dem ersten Abschattungsblech mit Blechzungen und dem Dach angeordnet, ist eine versetzte Anordnung der Abschattungsblech zueinander, so dass die Stege des einen, die Öffnungen des anderen Abschattungsblechs überdecken und sie sich somit gegenseitig abschatten, nicht notwendig. Dadurch, dass das durch die ersten Öffnungen fallende Licht einen Winkel ungleich 90° zum zweiten Abschattungsblech aufweist, können die ersten und zweiten Öffnungen des ersten und zweiten Abschattungsblechs konzentrisch ausgerichtet sein, und dennoch fällt das Licht auf einen Steg des zweiten Abschattungsblechs.

Das erste Abschattungsblech weist insbesondere eine erste, von dem Dach abgewandte Oberfläche und eine zweite, dem Dach zugewandte Oberfläche auf. Analog weist das zweite Abschattungsblech eine erste, von dem Dach abgewandte Oberfläche und eine zweite, dem Dach zugewandte Oberfläche auf. Sind beide Abschattungsbleche parallel zueinander und parallel zu dem Dach des Schienenfahrzeugs, insbesondere horizontal, angeordnet, weisen die ersten Oberflächen der Abschattungsbleche, insbesondere vertikal, nach oben vom Schienenfahrzeug weg und die zweiten Oberflächen weisen entsprechend zum Schienenfahrzeug hin. Würde eine Blechzunge des ersten Abschattungsblechs im Winkel von 90° zum ersten Abschattungsblech gebogen sein, würde sie weder zur ersten Oberfläche, noch zur zweiten Oberfläche des ersten Abschattungsblechs beitragen. Blechzungen mit einen Winkel im Intervall von 10° bis 80° zum ersten Abschattungsblech hingegen weisen eine zur ersten Oberfläche des ersten Abschattungsblechs gehörige erste Oberfläche und eine zur zweiten Oberfläche des zweiten Abschattungsblechs gehörige zweite Oberfläche auf.

Gemäß einer weiteren Weiterbildung der Erfindung ist das Material des ersten Abschattungsblechs, insbesondere das Material der ersten Oberfläche des ersten Abschattungsblechs, so ausgewählt und die erste Oberfläche des ersten Abschattungsblechs so bearbeitet und/oder beschichtet, dass sie mehr sichtbares Licht absorbiert, als sie reflektiert. Elektromagnetische Strahlung mit Wellenlängen von 380nm bis 780nm wird im Sinne dieser Erfindung als sichtbares Licht bezeichnet. Verglichen werden dabei die absorbierten und reflektierten Leistungen der auf die erste Oberfläche des ersten Abschattungsblechs einfallenden Strahlung. Durch das erste Abschattungsblech wird insbesondere mehr Lichtleistung absorbiert und somit in Wärme umgesetzt, als reflektiert wird.

Gemäß einer Ausgestaltung ist das Material des ersten Abschattungsblechs, insbesondere das Material der ersten Oberfläche des ersten Abschattungsblechs, so ausgewählt und die erste Oberfläche des ersten Abschattungsblechs so bearbeitet und/oder beschichtet, dass eine Absorption von elektromagnetischer Strahlung im Wellenlängenbereich von 300nm bis 100µm durch die erste Oberfläche des ersten Abschattungsblechs größer ist, als die Summe aus Dissipation, Transmission und Reflexion der genannten elektromagnetischen Strahlung. Zusätzlich zum sichtbaren Licht wird hier noch die Infrarotstrahlung besser absorbiert als reflektiert. Dissipation und Transmission von elektromagnetischer Strahlung im genannten Wellenlängenbereich sind durch die Auswahl eines Intransparenten Materials des ersten Abschattungsblechs und/oder der Oberfläche des ersten Abschattungsblechs näherungsweise Null. Eine Ausführungsform sieht vor, dass die erste Oberfläche des ersten Abschattungsblechs mehr als die doppelte, insbesondere mehr als die achtfache Strahlungsleistung absorbiert, im Vergleich zur reflektierten Strahlungsleistung. Insbesondere weist die erste Oberfläche des ersten Abschattungsblechs einen gerichteten spektralen Absorptionsgrad in Richtung der Flächennormalen für elektromagnetische Strahlung mit Wellenlängen von 300nm bis 100µm, insbesondere für sichtbares Licht, größer 0,5, insbesondere größer 0,7 auf.

Eine weitere Weiterbildung sieht vor, dass das Material des ersten Abschattungsblechs, insbesondere der ersten Oberfläche des ersten Abschattungsblechs, so ausgewählt und die erste Oberfläche des ersten Abschattungsblechs so bearbeitet und/oder beschichtet ist, dass das erste Abschattungsblech auf der Seite der ersten Oberfläche einen Wärmeübergangskoeffizienten zu ruhender Luft senkrecht zum Abschattungsblech von mindestens 5 W/(m²*K), insbesondere zumindest 7 W/(m²*K), aufweist. Ein Wärmeübergang erfordert eine Temperaturdifferenz der beiden aneinandergrenzenden Medien, hier dem ersten Abschattungsblech und der das erste Abschattungsblech umgebenden Luft. Der Wärmeübergangskoeffizient ist seinerseits abhängig von den Medien, hier der Umgebungsluft und dem Material der ersten Oberfläche des ersten Abschattungsblechs und/oder dem Material des ersten Abschattungsblechs. Der Wärmeübergang erfolgt hauptsächlich durch eine Wärmeübertragung durch Konvektion an der Grenzfläche von erster Oberfläche des ersten Abschattungsblechs und der Umgebungsluft. Der Wärmeübergangskoeffizient wird nach einem standardisierten Verfahren ermittelt. Er ist neben dem Material auch von der Oberflächenbeschaffenheit der ersten Oberfläche des ersten Abschattungsblechs und von der chemischen Zusammensetzung der Umgebungsluft und von einer Strömungsgeschwindigkeit der Umgebungsluft entlang des ersten Abschattungsblechs abhängig. Die angegebenen Werte beziehen sich auf einen Wärmeübergang bei zur ersten Oberfläche stationärer Luft.

Durch einen hohen spektralen Absorptionsgrad für elektromagnetische Strahlung mit Wellenlängen im Intervall von 300nm bis 100µm, zumindest jedoch für sichtbares Licht, wird das erste Abschattungsblech durch Sonneneinstrahlung erwärmt. Das gegenüber seiner Umgebung erwärmte erste Abschattungsblech erwärmt anschließend seinerseits durch einen guten Wärmeübergang die Umgebungsluft, insbesondere die an die erste Oberfläche des ersten Abschattungsblechs angrenzende Luftschicht der umgebenden Luft.

Eine weitere Weiterbildung sieht vor, dass die zweite Oberfläche des ersten Abschattungsblechs so bearbeitet und/oder beschichtet ist, dass sie einen Gesamtemissionsgrad εₙ in Richtung der Flächennormalen von höchstens 0,7, insbesondere von höchstens 0,5 aufweist. Auch die erste Oberfläche kann so bearbeitet und/oder beschichtet sein, dass sie einen Gesamtemissionsgrad εₙ in Richtung der Flächennormalen von höchstens 0,7, insbesondere von höchstens 0,5 aufweist.

Die Leistung der emittierten Wärmestrahlung ist dabei unabhängig vom Material des Strahlers und hängt von der Oberfläche des Strahlers ab. Der Gesamtemissionsgrad hängt neben dem Winkel der Emission, hier 90° zur entsprechenden Oberfläche, von der Temperatur des Strahlers, insbesondere von der Temperatur seiner Oberfläche, ab und gilt gegebenenfalls nur in einem vorgegebenen Wellenlängenbereich. Üblicherweise wird der Gesamtemissionsgrad bei Standardbedingungen ermittelt und entsprechend angegeben. Dies gilt auch hier. Für die Funktion der Erfindung ist vor allem eine geringe Emission an Infrarotstrahlung von Vorteil. Insbesondere beträgt daher ein gerichteter spektraler Emissionsgrad in Richtung der Flächennormalen für elektromagnetische Strahlung mit Wellenlängen im Intervall 300nm...100µm weniger als 0,7 oder gar weniger als 0,5. Nachfolgend wird der letztgenannte gerichtete spektrale Emissionsgrad in Richtung der Flächennormalen für elektromagnetische Strahlung mit Wellenlängen im angegebenen Intervall als gerichteter spektraler Emissionsgrad bezeichnet.

Bei einem relativ kleinen Emissionsgrad und gleichzeitig einem relativ hohen Absorptionsgrad für sichtbares Licht und gegebenenfalls Infrarotstrahlung der ersten Oberfläche des ersten Abschattungsblechs wird sichergestellt, dass wenig der in Wärme umgesetzten Sonneneinstrahlung wieder durch Wärmestrahlung abgegeben wird. Erreicht wird dies beispielsweise dadurch, dass eine vergleichsweise raue, schwarzmatte Pulverlackierung auf die erste Oberfläche des ersten Abschattungsblechs aufgebracht wird. Durch die mikroskopischen kleinen Erhebungen und Vertiefungen und der dadurch verringerten Fläche, welche die Strahlung senkrecht von der Fläche emittieren kann, wird der größtmögliche Anteil an reflektierter Strahlung wieder selbst absorbiert.

Ist auch die zweite Oberfläche des zweiten Abschattungsblechs so bearbeitet und/oder beschichtet ist, dass sie einen Gesamtemissionsgrad εₙ in Richtung der Flächennormalen und/oder einen gerichteten spektralen Emissionsgrad kleiner 0,7, insbesondere kleiner 0,5 aufweist, wird vom zweiten Abschattungsblech nur wenig Strahlung emittiert und damit nur geringfügig Wärmestrahlung in Richtung des Dachs des Schienenfahrzeugs abgestrahlt. Die zweite Oberfläche des zweiten Abschattungsblechs kann den gleichen oder einen kleineren Wert für den Gesamtemissionsgrad εₙ in Richtung der Flächennormalen und/oder für den gerichteten spektralen Emissionsgrad aufweisen, als die zweite Oberfläche des ersten Abschattungsblechs. Da das zweite Abschattungsblech bei Sonneneinstrahlung eine deutlich geringere Temperatur aufweist, als das erste Abschattungsblech, ist ein flächennormierter Wärmestrom zum Dach des Schienenfahrzeugs durch eine von der zweiten Oberfläche des zweiten Abschattungsblechs emittierte Wärmestrahlung kleiner als ein Wärmestrom durch die von der zweiten Oberfläche des ersten Abschattungsblechs emittierte Wärmestrahlung in Richtung des zweiten Abschattungsblechs.

Das zweite Abschattungsblech weist in einer einfachen Ausführungsform zwei gleichartig bearbeitete Oberflächen auf, wodurch auch die erste Oberfläche den genannten Gesamtemissionsgrad εₙ in Richtung der Flächennormalen und/oder den genannten gerichteten spektralen Emissionsgrad aufweist. Die erste Oberfläche des zweiten Abschattungsblechs kann aber auch einen Gesamtemissionsgrad εₙ in Richtung der Flächennormalen und/oder einen gerichteten spektralen Emissionsgrad von größer 0,5, insbesondere größer 0,7 aufweisen. Durch Wärmeabstrahlung in Richtung des ersten Abschattungsblechs wird das zweite Abschattungsblech gekühlt und das erste Abschattungsblech weiter aufgeheizt. Im Gegensatz zum ersten Abschattungsblech kann das zweite Abschattungsblech einen Wärmeübergangskoeffizienten zu stationärer Luft senkrecht zum Abschattungsblech kleiner 7 W/(m²*K), insbesondere kleiner 5 W/(m²*K) aufweisen, insbesondere an beiden Oberflächen.

Die erste Oberfläche des zweiten Abschattungsblechs kann fürderhin so bearbeitet und/oder beschichtet sein, dass sie einen gerichteten spektralen Absorptionsgrad in Richtung der Flächennormalen für elektromagnetische Strahlung mit Wellenlängen von 380nm bis 780nm, insbesondere für elektromagnetische Strahlung mit Wellenlängen im Intervall 300nm...100µm aufweist, welcher gleich groß oder kleiner ist einem gerichteten spektralen Absorptionsgrad in Richtung der Flächennormalen für elektromagnetische Strahlung mit Wellenlängen von 380nm bis 780nm, insbesondere für elektromagnetische Strahlung mit Wellenlängen im Intervall 300nm...100µm, der ersten Oberfläche des ersten Abschattungsblechs. Insbesondere ist das Verhältnis von dem genannten Absorptionsgrad der ersten Oberfläche des ersten Abschattungsblechs und dem genannten Absorptionsgrad der ersten Oberfläche des zweiten Abschattungsblechs größer 1,5, insbesondere größer 2.

Flächennormiert absorbiert die erste Oberfläche des zweiten Abschattungsblechs gleich viel oder weniger sichtbares Licht oder elektromagnetische Strahlung im Wellenlängenbereich von 300nm bis 100µm als die erste Oberfläche des ersten Abschattungsblechs.

Durch eine geringere Absorption von elektromagnetischer Strahlung, insbesondere von sichtbarem Licht und Infrarotstrahlung, erwärmt sich das zweite Abschattungsblech nicht in vergleichbarem Maße wie das erste Abschattungsblech und bleibt bei starker Sonneneinstrahlung deutlich kühler.

Ein Zwischenraum zwischen dem zweiten Abschattungsblech und dem Dach des Schienenfahrzeugs ist in vertikaler Richtung von dem zweiten Abschattungsblech und dem Dach des Schienenfahrzeugs begrenzt. Gemäß einer weiteren Weiterbildung der Erfindung ist das zweite Abschattungsblech so auf dem Dach des Schienenfahrzeugs angeordnet, dass Umgebungsluft horizontal in den Zwischenraum einströmbar ist. Der Zwischenraum ist somit zumindest für einströmende Umgebungsluft horizontal frei zugänglich. Ist das zweite Abschattungsblech parallel zum Dach und horizontal auf dem Dach angeordnet, kann die Umgebungsluft an den Seiten des Schienenfahrzeugs und/oder von den Stirnseiten des Schienenfahrzeugs in den Zwischenraum einströmen. Ist der Zwischenraum beidseitig oder gar zu allen Seiten des Schienenfahrzeugs offen, ist er von Luft durchströmbar. Erreicht wird dies beispielsweise dadurch, dass das zweite Abschattungsblech auf säulenartigen Abstandshaltern auf dem Dach des Schienenfahrzeugs abgestützt wird. Die Abstandshalter können über die Fläche des zweiten Abschattungsblechs verteilt angeordnet sein. Ist das zweite Abschattungsblech am Rand des zweiten Abschattungsblechs und/oder des Dachs durch Wände miteinander verbunden, sind Öffnungen in diesen Wänden vorgesehen, durch welche Umgebungsluft strömen kann.

In den Zwischenraum zwischen dem zweiten Abschattungsblech und dem Dach des Schienenfahrzeugs einströmende Umgebungsluft dient der Kühlung des Dachs des Schienenfahrzeugs.

Weitergebildet ist ein Zwischenraum zwischen dem ersten Abschattungsblech und dem zweiten Abschattungsblech horizontal abgeschlossen, beispielsweise sind das erste und das zweite Abschattungsblech am Rand des ersten und/oder des zweiten Abschattungsblechs und/oder zwischen ihren Rändern unter Bildung von Kammern durch Wände miteinander verbunden, so dass Umgebungsluft nicht horizontal in den Zwischenraum strömen kann. Dadurch kann Umgebungsluft nicht horizontal in den Zwischenraum und/oder Luft zwischen den Kammern frei strömen, sondern ausschließlich, insbesondere nach oben, durch die entsprechend ausgestalteten Öffnungen der Abschattungsbleche strömen.

Wird der Dachaufbau gebildet von einem ersten Abschattungsblech und gegebenenfalls einem zweiten Abschattungsblech, welche beabstandet voneinander und beabstandet zum Dach des Schienenfahrzeugs angeordnet sind, wobei das erste Abschattungsblech einen hohen spektralen Absorptionsgrad für sichtbares Licht und gegebenenfalls Infrarotstrahlung und einen hohen Wärmeleitkoeffizient zu Luft aufweist, dann wird das erste Abschattungsblech durch Sonneneinstrahlung erwärmt. Dadurch wird die Umgebungsluft über dem ersten Abschattungsblech erwärmt. Die erwärmte Luft löst sich vom ersten Abschattungsblech und steigt auf. Durch die Öffnungen des ersten Abschattungsblechs wird Luft nachgeführt, welche durch den erfindungsgemäßen Dachaufbau aus der Umgebung des Schienenfahrzeugs dazu über das Dach des Schienenfahrzeugs geführt wird und dieses dadurch gekühlt wird. Die Ausgestaltung und Anordnung der erfindungsgemäßen Abschattungsbleche führt im Einsatz der Erfindung zu einem erzwungenen Luftstrom über das Dach, zwischen dem ersten Abschattungsblech und dem Dach oder vorzugsweise zwischen dem zweiten Abschattungsblech und dem Dach.

Vorhandene Blechzungen im ersten Abschattungsblech dienen daher nicht nur dem Zweck der verringerten Sonneneinstrahlung auf das Dach und/oder auf das zweite Abschattungsblech. Sie können darüber hinaus zur Führung der genannten Luftströmungen dienen. Ähnlich Schornsteinen können auch sie, bei entsprechender Ausformung, einen Kamineffekt erzeugen.

Gemäß einer weiteren Weiterbildung des Schienenfahrzeugs weist das Dach eine zum ersten Abschattungsblech weisende Oberfläche des Dachs auf, welche so bearbeitet und/oder beschichtet ist, dass sie einen Gesamtemissionsgrad εₙ in Richtung der Flächennormalen und/oder einen gerichteten spektralen Emissionsgrad von höchstens 0,7, insbesondere von höchstens 0,5 aufweist. Dadurch wird verhindert, dass das zu kühlende Dach seine Wärme über Wärmestrahlung an das erste oder das zweite Abschattungsblech abgibt, und dieses entsprechend aufheizt, sondern nur an die über das Dach strömende Luft. Daher weist es insbesondere auch einen Wärmeübergangskoeffizienten zu ruhender Luft senkrecht zum Dach von mindestens 4 W/(m²*K), insbesondere zumindest 7 W/(m²*K) auf. Ein geringer spektraler Absorptionsgrad für Infrarotstrahlung ist ebenfalls von Vorteil. Daher nimmt beispielweise ein Verhältnis aus dem gerichteten spektralen Absorptionsgrad in Richtung der Flächennormalen für elektromagnetische Strahlung mit Wellenlängen von 380nm bis 780nm, insbesondere für elektromagnetische Strahlung mit Wellenlängen im Intervall 300nm...100µm der zum ersten Abschattungsblech weisenden Oberfläche des Dachs und dem gerichteten spektralen Absorptionsgrad in Richtung der Flächennormalen für elektromagnetische Strahlung mit Wellenlängen von 380nm bis 780nm, insbesondere für elektromagnetische Strahlung mit Wellenlängen im Intervall 300nm...100µm der ersten Oberfläche des zweiten Abschattungsblechs Werte im Intervall von 0,7 bis 1,3 an. Insbesondere ist das Verhältnis ungefähr 1. Die zum ersten Abschattungsblech weisende Oberfläche des Dachs ist wiederum entsprechend zu bearbeiten und/oder zu beschichten.

Schienenfahrzeuge, insbesondere Niederflurschienenfahrzeuge des öffentlichen Personennahverkehrs, weisen oft Gerätecontainer auf ihrem Dach auf. Die Gerätecontainer umschließen dabei beispielsweise zu kühlende Leistungselektronik und/oder Antriebsaggregate. Nach oben hin abgeschlossen werden die Gerätecontainer herkömmlicherweise von einem Deckelblech. Das Deckelblech bildet somit das Dach des Schienenfahrzeugs im Sinne der Erfindung.

Eine weitere Ausführungsform der Erfindung sieht vor, dass zumindest das erste Abschattungsblech und/oder das zweite Abschattungsblech das Dach des Schienenfahrzeugs überragt. Dabei müssen das erste Abschattungsblech und/oder das zweite Abschattungsblech nicht die Seitenwände und/oder die Stirnseiten des Schienenfahrzeugs überragen. Es genügt den zu kühlenden Gerätecontainer auf dem Dach des Schienenfahrzeugs zu überragen.

Das erste und/oder das zweite Abschattungsblech ist beispielsweise aus einem Metall oder einer Metalllegierung hergestellt, insbesondere aus AlMg 4,5 oder 1.4301. Das zweite Abschattungsblech ist entsprechend unlackiert, insbesondere glatt glänzend geschliffen oder poliert.

Die Erfindung lässt zahlreiche Ausführungsformen zu. Sie wird anhand der nachfolgenden Figuren näher erläutert, in denen jeweils ein Ausgestaltungsbeispiel dargestellt ist. Gleiche Elemente in den Figuren sind mit gleichen Bezugszeichen versehen.
- Fig. 1: zeigt einen Querschnitt durch einen Dachaufbau eines erfindungsgemäßen Schienenfahrzeugs,
- Fig. 2: zeigt eine Draufsicht auf den Dachaufbau aus Fig. 1,
- Fig. 3: zeigt einen Querschnitt durch zwei erfindungsgemäße Abschattungsbleche,
- Fig. 4: zeigt einen weiteren Querschnitt durch zwei erfindungsgemäße Abschattungsbleche,
- Fig. 5: zeigt schematisch Luftströmungen an einem erfindungsgemäßen Dachaufbau.

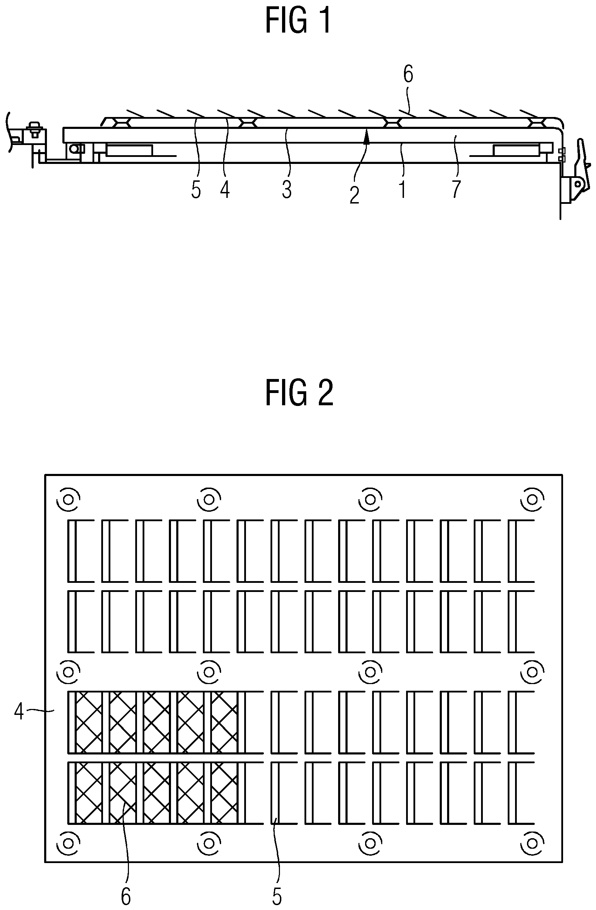

In Fig. 1 ist ein Dachaufbau eines Schienenfahrzeugs im Querschnitt dargestellt. Ein Deckelblech bildet die luft- und regendichte Abdeckung eines Containers des Schienenfahrzeugs und damit das Dach 1 des Schienenfahrzeugs. Über dem Dach 1 ist beabstandet ein zweischaliges Sonnensegel 2 angeordnet, welches ein, hier horizontal und parallel zum Dach 1 angeordnetes, erstes Abschattungsblech 4 mit ersten Öffnungen 5 aufweist und beabstandet dazu ein parallel angeordnetes zweites Abschattungsblech 3 mit zweiten Öffnungen. Die zweiten Öffnungen sind hier der Einfachheit halber nicht dargestellt. Das erste Abschattungsblech 4 weist darüber hinaus Blechzungen 6 auf, welche die ersten Öffnungen 5 zumindest teilweise bedecken, da die Blechzungen 6 an zueinander parallelen, zu einer Längsachse des Schienenfahrzeugs senkrechten Rändern 9 der ersten Öffnungen 5 mit dem ersten Abschattungsblech 4, insbesondere fügestellenfrei, verbunden sind und hier einen Winkel zum ersten Abschattungsblech 4 von ungefähr 20° aufweisen. Die Ränder 9 sind hier die Ränder mit den genannten Nebenbedingungen der ersten Öffnungen 5, welche einem Bug des Schienenfahrzeugs näher sind.

Zwischen dem ersten und dem zweiten Abschattungsblech 4 und 3 ist ein Zwischenraum 7 zur Kühlung vorgesehen.

Fig. 2 veranschaulicht den Dachaufbau aus Fig. 1 in einer Draufsicht. Das erste Abschattungsblech 4 weist ein Muster mit mehreren Doppelreihen von Öffnungen 5 auf, welche durch Stanzen und Aufkanten der Blechzungen 6 aus dem ersten Abschattungsblech 4 gefertigt sind. Das Material ist entsprechend an Öffnungsrändern nach oben abgekantet und bildet die schräg nach oben gerichteten Blechzungen 6.

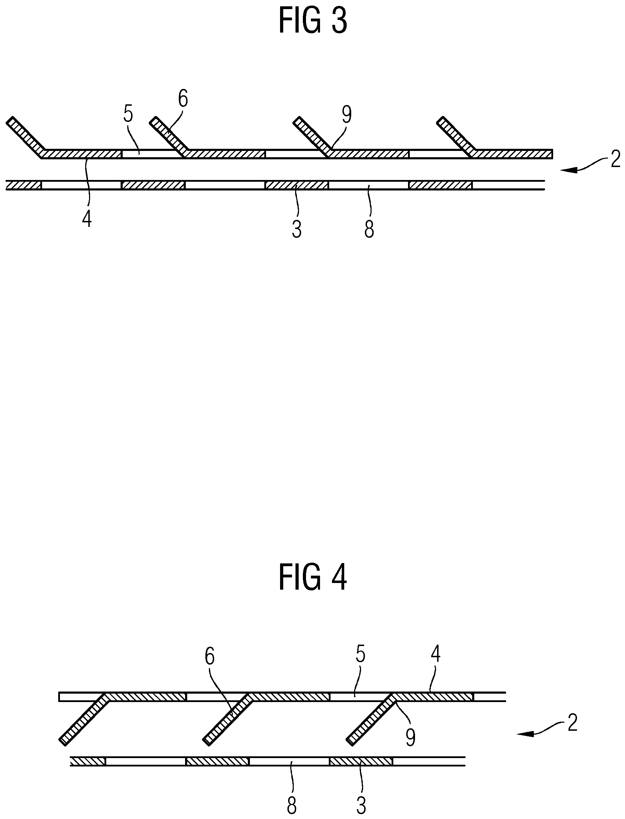

Das zweischalige Sonnensegel 2 in Fig. 3 weist ein erstes und ein zweites Abschattungsblech 4 und 3 auf, welche so zueinander ausgestaltet und versetzt zueinander angeordnet sind, dass sie sich gegenseitig abschatten. Hier bedecken die zweiten Öffnungen 8 die ersten Öffnungen senkrecht zu einer gemeinsamen Normale auf die Abschattungsbleche 4 und 3 vollständig. Hier weisen die Abschattungsbleche 4 und 3 gleiche Gitterweiten auf und sind so zueinander versetzt angeordnet, dass eine Öffnung 5 des erste Abschattungsblechs 4 über einem Steg des zweiten Abschattungsblechs 3 zu liegen kommt. Trifft Licht in einem beliebigen Punkt durch beide Öffnungen auf das Dach, so beträgt der Einfallswinkel des Lichts zum Dach hier weniger als 90°.

Im gezeigten Ausführungsbeispiel sind die Blechzungen 6 quer zur Fahrtrichtung ausgerichtet, so dass die Belüftung des zwischen den Abschattungsblechen 4 und 3 befindlichen Luftraum in beiden Fahrtrichtungen des Schienenfahrzeugs gleich ist. Die Blechzungen 6 fangen den Fahrtwind ein und leiten ihn in den Zwischenraum 7. Auch bei stehendem Schienenfahrzeug begünstigen sie dessen Belüftung. Gegenüber einer blechzungenfreien ersten Öffnung leiten die Blechzungen 6 aufsteigende Warmluft in eine vorgegebene Richtung, so dass sie turbulenzärmer aus dem zweischaligen Sonnensegel 2 austreten kann.

Im Unterschied zu Fig. 3 sind die Blechzungen 6 in Fig. 4 zum Dach hin geneigt. Sie ragen somit in den Luftraum zwischen dem ersten und dem zweiten Abschattungsblech 4 und 3. Auch hierdurch wird warme Luft von unten, aus dem Dachbereich, nach oben, abgeführt. Auch hier sind die zweiten Öffnungen 8 zur Abschattung schräg versetzt zu ersten Öffnungen 5. Das erste Abschattungsblech 4 ist hier auf seiner vom zweiten Abschattungsblech 3 abgewandten Oberseite matt emailliert, zur Abstrahlung von Wärme. Das zweite Abschattungsblech 3 hingegen ist hier blank poliert.

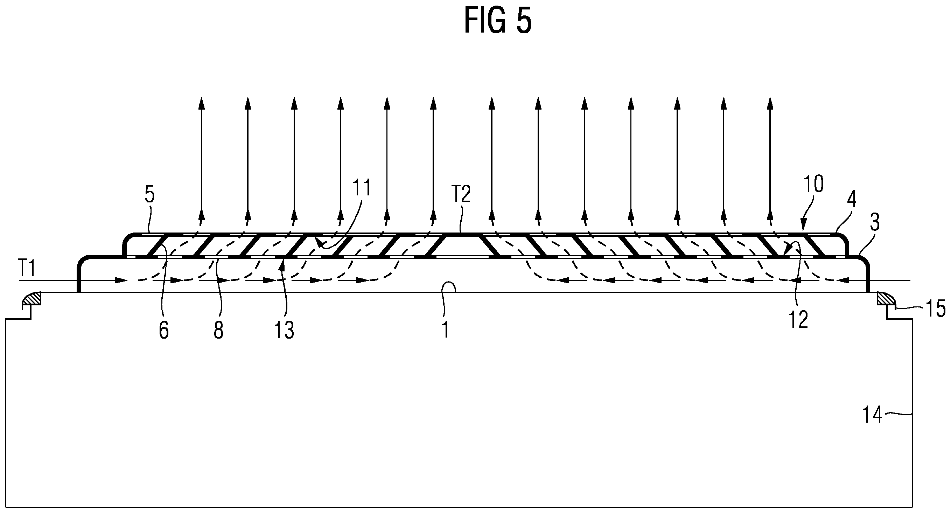

Fig. 5 veranschaulicht die Wirkungsweise eines erfindungsgemäßen Dachaufbaus. Im Querschnitt sind ein Gerätecontainer 14, welcher durch das Deckelblech 15 nach oben hin abgeschlossen wird, und ein von diesem beabstandet angeordnetes erstes Abschattungsblech 4 und ein zwischen Deckelblech 15 und erstem Abschattungsblech 4 angeordnetes zweites Abschattungsblech 3, welches seinerseits einen Abstand größer Null zum Deckelblech 15 und zum ersten Abschattungsblech 4 aufweist, gezeichnet. Das Deckelblech 15 bildet hier das Dach 1 des Schienenfahrzeugs. Sowohl das erste Abschattungsblech 4 als auch das zweite Abschattungsblech 3 weisen jeweils mehrere Öffnungen 5, 8 zum Durchtritt von Luft auf. Sie verlaufen horizontal.

Die erste Oberfläche 10 des ersten Abschattungsblechs 4 ist geeignet, eine größere Leistung an einfallendem Licht zu absorbieren und es ist geeignet zur Wärmeübertragung auf die unmittelbar an das erste Abschattungsblech angrenzende Umgebungsluft, so dass die Umgebungsluft durch Sonneneinstrahlung auf die erste Oberfläche des ersten Abschattungsblech stark erwärmt wird, um sich anschließend als Thermikblase abzulösen und frische Luft durch die Öffnungen 5 im ersten Abschattungsblech 4 nachzuziehen. Da Luft zwischen das erste Abschattungsblech 4 und das zweite Abschattungsblech 3 ausschließlich durch die Öffnungen 8 des zweiten Abschattungsblechs 3 nachströmen kann, wird weitere, kühle Umgebungsluft, hier mit der Temperatur T1, horizontal zwischen das zweite Abschattungsblech 3 und das Dach 1 nachgeführt. Durch die Ausgestaltung der Blechzungen 6 werden die Luftströme geführt. Die Luftströme sind mit Pfeilen dargestellt.

Weist die erste Oberfläche 10 des ersten Abschattungsblechs 4 einen größeren Absorptionsgrad für zumindest sichtbares Licht auf, so wird das erste Abschattungsblech durch einfallendes Licht stärker aufgeheizt, hier auf eine Temperatur T2 > T1, und der Temperaturunterschied zwischen dem ersten Abschattungsblech 4 und sich der darüber befindlichen Luft ist vergrößert. Dadurch ist der Wärmestrom vom ersten Abschattungsblech 4 auf die Luft größer und die Luft wird stärker aufgeheizt. Einen hohen Absorptionsgrad für auf das erste Abschattungsblech 4 einfallendes Licht weist die erste Oberfläche 10 des ersten Abschattungsblechs 4 beispielsweise dadurch auf, dass sie dunkel, insbesondere schwarz lackiert ist. Ein geringerer Absorptionsgrad für auftreffendes Licht wird beispielsweise durch eine weiße Lackierung oder eine spiegelnde Oberfläche erreicht.

Von nebengeordneter Bedeutung ist, dass von beiden Abschattungsblechen 3 und 4 wenig Wärmestrahlung in Richtung des Dachs 1 des Schienenfahrzeugs emittiert wird und vom zweiten Abschattungsblech 3 wenig Lichtenergie in Wärmeenergie umgewandelt wird. Dies wird insbesondere dadurch erreicht, dass die erste Oberfläche 12, hier die Oberseite des ersten Abschattungsblechs schwarz lackiert ist, und die erste Oberfläche 12, hier die Oberseite des zweiten Abschattungsblechs 3, sowie die zweiten Oberflächen 11 und 13, hier die Unterseiten des ersten und des zweiten Abschattungsblechs 4 und 3 sind entsprechend andersfarbig lackiert oder unlackiert. Beispielsweise umfasst die zweite Oberfläche 11 des ersten Abschattungsblechs 4 und/oder die erste und/oder die zweite Oberfläche 12, 13 des zweiten Abschattungsblechs 3 blank poliertes Metall.

## Patentansprüche

1. Schienenfahrzeug mit einem Dach (1) und mit einem vom Dach (1) beabstandet angeordneten ersten Abschattungsblech (4), **dadurch gekennzeichnet, dass** das erste Abschattungsblech (4) erste Öffnungen (5) zum Durchtritt von Luft aufweist und zwischen dem ersten Abschattungsblech (4) und dem Dach (1) ein zweites Abschattungsblech (3) angeordnet ist, welches zweite Öffnungen (8) zum Durchtritt von Luft aufweist, wobei das zweite Abschattungsblech (3) so zwischen dem ersten Abschattungsblech (4) und dem Dach (1) angeordnet ist, dass eine Projektion zumindest senkrecht zum Dach (1) des ersten und des zweiten Abschattungsblechs (4,3) auf das Dach (1) frei von Öffnungen ist und wobei das zweite Abschattungsblech (3) so zwischen dem ersten Abschattungsblech (4) und dem Dach (1) angeordnet ist, dass jede Gerade, welche durch die ersten Öffnungen (5) des ersten Abschattungsblechs (4) und durch die zweiten Öffnungen (8) des zweiten Abschattungsblechs (3) verläuft und das Dach (1) schneidet, das Dach (1) in einem Winkel kleiner 30° schneidet.

2. Schienenfahrzeug nach Anspruch 1, dass das erste Abschattungsblech (4) eine von dem Dach (1) abgewandte, erste Oberfläche (10) aufweist, welche so bearbeitet und/oder beschichtet ist, dass sie mehr sichtbares Licht absorbiert, als sie reflektiert.

3. Schienenfahrzeug nach einem der Ansprüche 1 oder 2, dass das erste Abschattungsblech (4) eine von dem Dach (1) abgewandte, erste Oberfläche (10) aufweist, wobei das Material des ersten Abschattungsblechs (4) so ausgewählt und die erste Oberfläche (10) so bearbeitet und/oder beschichtet ist, dass sie einen Wärmeübergangskoeffizienten zu ruhender Luft senkrecht zum Abschattungsblech von mindestens 7 W/(m²*K) aufweist.

4. Schienenfahrzeug nach einem der Ansprüche 1 bis 3, dass das erste Abschattungsblech (4) eine dem Dach (1) zugewandte, zweite Oberfläche (11) aufweist, welche so bearbeitet und/oder beschichtet ist, dass sie einen gerichteten spektralen Emissionsgrad in Richtung der Flächennormalen für elektromagnetische Strahlung mit Wellenlängen im Intervall 300nm...100µm von höchstens 0,5 aufweist.

5. Schienenfahrzeug nach Anspruch 1, **dadurch gekennzeichnet, dass** das zweite Abschattungsblech (3) parallel zum ersten Abschattungsblech (4) angeordnet ist.

6. Schienenfahrzeug nach einem der Ansprüche 1 bis 6, dass das zweite Abschattungsblech (3) eine von dem Dach (1) abgewandte, erste Oberfläche (12) und eine dem Dach zugewandte, zweite Oberfläche (13) aufweist, wobei die zweite Oberfläche (13) des zweiten Abschattungsblechs (3) so bearbeitet und/oder beschichtet ist, dass sie einen gerichteten spektralen Emissionsgrad in Richtung der Flächennormalen für elektromagnetische Strahlung mit Wellenlängen im Intervall 300nm...100µm kleiner 0,5 aufweist.

7. Schienenfahrzeug nach Anspruch 1 und 2, dass das zweite Abschattungsblech (3) eine von dem Dach (1) abgewandte, erste Oberfläche (12) und eine dem Dach zugewandte, zweite Oberfläche (13) aufweist, wobei die erste Oberfläche (12) des zweiten Abschattungsblechs (3) so bearbeitet und/oder beschichtet ist, dass sie einen gerichteten spektralen Absorptionsgrad in Richtung der Flächennormalen für elektromagnetische Strahlung mit Wellenlängen von 300nm bis 100µm aufweist, welcher gleich groß oder kleiner ist einem gerichteten spektralen Absorptionsgrad in Richtung der Flächennormalen für elektromagnetische Strahlung mit Wellenlängen von 300nm bis 100µm der ersten Oberfläche (10) des ersten Abschattungsblechs (4).

8. Schienenfahrzeug nach einem der Ansprüche 1 bis 7, **dadurch gekennzeichnet, dass** das Verhältnis aus einem ersten Abstand zwischen dem erstem Abschattungsblech (4) und dem Dach (1) und aus einem zweiten Abstand zwischen dem zweiten Abschattungsblech (3) und dem Dach (1) zwischen 1 und 1,5 beträgt.

9. Schienenfahrzeug nach einem der Ansprüche 1 bis 8, **dadurch gekennzeichnet, dass** ein Zwischenraum zwischen dem zweiten Abschattungsblech (3) und dem Dach (1) des Schienenfahrzeugs in vertikaler Richtung von dem zweiten Abschattungsblech (3) und dem Dach (1) des Schienenfahrzeugs begrenzt ist, wobei das zweite Abschattungsblech (3) so auf dem Dach (1) des Schienenfahrzeugs angeordnet ist, dass Umgebungsluft horizontal in den Zwischenraum einströmbar ist.

10. Schienenfahrzeug nach einem der Ansprüche 1 bis 9, **dadurch gekennzeichnet, dass** das erste Abschattungsblech (4) Blechzungen (6) aufweist, welche die ersten Öffnungen (5) im ersten Abschattungsblech (4) zumindest teilweise bedecken.

11. Schienenfahrzeug nach Anspruch 10, **dadurch gekennzeichnet, dass** die Blechzungen (6) einen Winkel im Intervall 30° bis 50° zum ersten Abschattungsblech (4) in einer Ebene parallel zu einer Längsachse des Schienenfahrzeugs und senkrecht zum ersten Abschattungsblech (4) aufweisen.

12. Schienenfahrzeug nach einem der Ansprüche 10 oder 11, **dadurch gekennzeichnet, dass** die Blechzungen (6) fügestellenfrei mit dem ersten Abschattungsblech (4) verbunden sind, wobei sie mittels eines Umformverfahrens aus dem ersten Abschattungsblech (4) hergestellt sind.

## Claims

1. Rail vehicle having a roof (1) and having a first shading plate (4) arranged at a distance from the roof (1), **characterized in that** the first shading plate (4) has first openings (5) for the passage of air and a second shading plate (3), which has second openings (8) for the passage of air, is arranged between the first shading plate (4) and the roof (1), wherein the second shading plate (3) is arranged between the first shading plate (4) and the roof (1) so that a projection at least perpendicular to the roof (1) of the first and the second shading plates (4, 3) on the roof (1) is free of openings and wherein the second shading plate (3) is arranged between the first shading plate (4) and the roof (1) so that each straight line, which extends through the first openings (5) of the first shading plate (4) and through the second openings (8) of the second shading plate (3) and intersects the roof (1), intersects the roof (1) at an angle of less than 30°.

2. Rail vehicle according to Claim 1, **characterized in that** the first shading plate (4) has a first surface (10) facing away from the roof (1), which is processed and/or coated so that it absorbs more visible light than it reflects.

3. Rail vehicle according to either of Claims 1 and 2, **characterized in that** the first shading plate (4) has a first surface (10) facing away from the roof (1), wherein the material of the first shading plate (4) is selected and the first surface (10) is processed and/or coated so that it has a heat transfer coefficient to stationary air perpendicular to the shading plate of at least 7 W/(m²*K).

4. Rail vehicle according to any one of Claims 1 to 3, **characterized in that** the first shading plate (4) has a second surface (11) facing toward the roof (1), which is processed and/or coated so that it has an oriented degree of spectral emission in the direction of the surface normals for electromagnetic radiation having wavelengths in the interval of 300 nm to 100 µm of at most 0.5.

5. Rail vehicle according to Claim 1, **characterized in that** the second shading plate (3) is arranged in parallel to the first shading plate (4).

6. Rail vehicle according to any one of Claims 1 to 6, **characterized in that** the second shading plate (3) has a first surface (12) facing away from the roof (1) and a second surface (13) facing toward the roof, wherein the second surface (13) of the second shading plate (3) is processed and/or coated so that it has an oriented degree of spectral emission in the direction of the surface normals for electromagnetic radiation having wavelengths in the interval of 300 nm to 100 µm less than 0.5.

7. Rail vehicle according to Claims 1 and 2, **characterized in that** the second shading plate (3) has a first surface (12) facing away from the roof (1) and a second surface (13) facing toward the roof, wherein the first surface (12) of the second shading plate (3) is processed and/or coated so that it has an oriented degree of spectral absorption in the direction of the surface normals for electromagnetic radiation having wavelengths in the interval of 300 nm to 100 µm which is equal to or less than an oriented degree of spectral absorption in the direction of the surface normals for electromagnetic radiation having wavelengths of 300 nm to 100 µm of the first surface (10) of the first shading plate (4).

8. Rail vehicle according to any one of Claims 1 to 7, **characterized in that** the ratio of a first distance between the first shading plate (4) and the roof (1) and a second distance between the second shading plate (3) and the roof (1) is between 1 and 1.5.

9. Rail vehicle according to any one of Claims 1 to 8, **characterized in that** an intermediate space between the second shading plate (3) and the roof (1) of the rail vehicle is delimited in the vertical direction by the second shading plate (3) and the roof (1) of the rail vehicle, wherein the second shading plate (3) is arranged on the roof (1) of the rail vehicle so that surrounding air can flow horizontally into the intermediate space.

10. Rail vehicle according to any one of Claims 1 to 9, **characterized in that** the first shading plate (4) has sheet-metal tongues (6), which at least partially cover the first openings (5) in the first shading plate (4).

11. Rail vehicle according to Claim 10, **characterized in that** the sheet-metal tongues (6) have an angle in the interval of 30° to 50° to the first shading plate (4) in a plane parallel to a longitudinal axis of the rail vehicle and perpendicular to the first shading plate (4).

12. Rail vehicle according to either one of Claims 10 and 11, **characterized in that** the sheet-metal tongues (6) are connected without joints to the first shading plate (4), wherein they are produced from the first shading plate (4) by means of a reshaping method.

## Revendications

1. Véhicule ferroviaire, comprenant un toit (1) et comprenant une première tôle (4) d'offuscation disposée à distance du toit (1), **caractérisé en ce que** la première tôle (4) d'offuscation a de premières ouvertures (5) de passage de l'air et il est disposé, entre la première tôle (4) d'offuscation et le toit (1) une deuxième tôle (3) d'offuscation, qui a des deuxièmes ouvertures (6) de passage de l'air, la deuxième tôle (3) d'offuscation étant disposée entre la première tôle (4) d'offuscation et le toit (1), de manière à ce qu'une projection, au moins perpendiculairement au toit (1), de la première et de la deuxième tôles (4, 3) d'offuscation sur le toit (1), soit exempte d'ouvertures et dans lequel la deuxième tôle (3) d'offuscation est disposée entre la première tôle (4) d'offuscation et le toit (1), de manière à ce que toute droite, qui passe par les premières ouvertures (5) de la première tôle (4) d'offuscation et par les deuxièmes ouvertures (8) de la deuxième tôle (3) d'offuscation et qui coupe le toit (1), coupe le toit (1) suivant un angle plus petit que 30°.

2. Véhicule ferroviaire suivant la revendication 1, **caractérisé en ce que** la première tôle (4) d'offuscation a une première surface (10) loin du toit (1), qui est traitée et/ou revêtue de manière à absorber plus de lumière visible qu'elle n'en réfléchit.

3. Véhicule ferroviaire suivant l'une des revendications 1 ou 2, **caractérisé en ce que** la première tôle (4) d'offuscation a une première surface (10) loin du toit (1), le matériau de la première tôle (4) d'offuscation étant choisi et la première surface (10) étant traitée et/ou revêtue de manière à avoir un coefficient de transmission de la chaleur à de l'air au repos perpendiculairement à la tôle d'offuscation d'au moins 7 W/(m²*K).

4. Véhicule ferroviaire suivant l'une des revendications 1 à 3, **caractérisé en ce que** la première tôle (4) d'offuscation a une deuxième surface (11) tournée vers le toit (1), qui est traitée et/ou revêtue de manière à avoir un degré d'émission spectrale dirigée dans la direction de la normale à la surface, pour du rayonnement électromagnétique de longueur d'onde dans l'intervalle de 300nm...100µm, de 0,5 au plus.

5. Véhicule ferroviaire suivant la revendication 1, **caractérisé en ce que** la deuxième tôle (3) d'offuscation est parallèle à la première tôle (4) d'offuscation.

6. Véhicule ferroviaire suivant l'une des revendications 1 à 5, **caractérisé en ce que** la deuxième tôle (3) d'offuscation a une première surface (12) loin du toit (1) et une deuxième surface (13) tournée vers le toit, la deuxième surface (13) de la deuxième tôle (3) d'offuscation étant traitée et/ou revêtue de manière à avoir un degré d'émission spectrale dirigée dans la direction de la normale à la surface, pour du rayonnement électromagnétique de longueur d'onde dans l'intervalle 300nm...100µm, inférieur à 0,5.

7. Véhicule ferroviaire suivant la revendication 1 et 2, **caractérisé en ce que** la deuxième tôle (3) d'offuscation a une première surface (12) loin du toit (1) et une deuxième surface (13) tournée vers le toit, dans lequel la première surface (12) de la deuxième tôle (3) d'offuscation est traitée et/ou revêtue de manière à avoir un degré d'absorption spectrale dirigée dans la direction de la normale à la surface, pour du rayonnement électromagnétique de longueur d'onde de 300nm à 100µm, qui est inférieur ou égal à un degré d'absorption spectrale dirigée dans la direction de la normale à la surface pour du rayonnement électromagnétique de longueur d'onde de 300nm à 100 µm, de la première surface (10) de la première tôle (4) d'offuscation.

8. Véhicule ferroviaire suivant l'une des revendications 1 à 7, **caractérisé en ce que** le rapport d'une première distance, entre la première tôle (4) d'offuscation et le toit (1) et d'une deuxième distance entre la deuxième tôle (3) d'offuscation et le toit (1), est compris entre 1 et 1,5.

9. Véhicule ferroviaire suivant l'une des revendications 1 à 8, **caractérisé en ce qu'**un espace intermédiaire, entre la première tôle (3) d'offuscation et le toit (1) du véhicule ferroviaire dans la direction verticale, est délimité par la deuxième tôle (3) d'offuscation et par le toit (1) du véhicule ferroviaire, la deuxième tôle (3) d'offuscation étant disposée sur le toit (1) du véhicule ferroviaire de manière à ce que de l'air ambiant puisse pénétrer horizontalement dans l'espace intermédiaire.

10. Véhicule ferroviaire suivant l'une des revendications 1 à 9, **caractérisé en ce que** la première tôle (4) d'offuscation a des languettes (6), qui recouvrent, au moins en partie, les premières ouvertures (5) de la première tôle (4) d'offuscation.

11. Véhicule ferroviaire suivant la revendication 10, **caractérisé en ce que** les languettes (6) font un angle dans l'intervalle de 30° à 50° avec la première tôle (4) d'offuscation dans un plan parallèle à l'axe longitudinal du véhicule ferroviaire et perpendiculaire à la première tôle (4) d'offuscation.

12. Véhicule ferroviaire suivant l'une des revendications 10 ou 11, **caractérisé en ce que** les languettes (6) sont reliées sans joint à la première tôle (4) d'offuscation, en étant fabriquées au moyen d'un procédé de déformation à partir de la première tôle (4) d'offuscation.
